# EUROPEAN PATENT APPLICATION

(11) **EP 4 424 414 A1**
(43) Date of publication of application: **04.09.2024**
(21) Application number: 23158997.9
(22) Date of filing: 28.02.2023
(51) Int. Cl.: B01J 19/00, B01J 19/18, B01J 19/20, C08F 222/08

(54) **RAPID MIXING POLYMERIZATION REACTOR AND PROCESS**

(71) Applicant: Borealis AG, 1020 Vienna (AT)
(72) Inventor: AL-HAJ ALI, Mohammad, 06101 Porvoo (FI); AJELLAL, Noureddine, 06101 Porvoo (FI); SLEIJSTER, Henry, 6161 Sittard-Geleen (NL); SATTAR, Mubashar, 06101 Porvoo (FI); WEBER, Charlotta, 00180 Helsinki (FI)
(74) Representative: Kador & Partner Part mbB

(57) **Abstract**

The present invention relates to a polymerization reactor assembly, comprising a reactor having a housing and an inner space, the reactor comprising at least one inlet, at least one outlet, a draft tube having a substantially cylindrical shape and an inner space, wherein the draft tube is located within the inner space of the reactor so that an upper opening and a lower opening of the draft tube are fluidly connected with the inner space of the reactor, and a stirrer comprising a top plate located above the lower opening of the draft tube, a stirrer blade having a helical shape, which surrounds the draft tube, wherein the axis of the draft tube and the axis of the stirrer blade are coinciding, the stirrer blade extending concentrically with respect to the draft tube and the housing of the reactor, and a bottom plate located below the lower opening of the draft tube, wherein the inner space of the reactor comprises sections A, B, C, and D, wherein section A is the space defined by the housing of the reactor and an upper surface of the top plate, section B is the space defined by the housing of the reactor, the draft tube, a lower surface of the top plate and an upper surface of the bottom plate, section C is the space defined by the housing of the reactor and a lower surface of the bottom plate, and section D is the inner space of the draft tube, wherein the top plate has at least one first opening fluidly connecting section A and section B, wherein the bottom plate has at least one first opening fluidly connecting section B and section C, wherein the bottom plate has at least one second opening fluidly connecting section C and section D, and wherein the stirrer is rotatable around the draft tube and inside the housing of the reactor. The present invention further relates to a process for polymerization of at least one alpha-olefin monomer using the above reactor assembly.

## Description

The present invention is concerned with a polymerization reactor and a process for polymerization involving rapid mixing of bulk components with introduced reactants.

### Background of the invention

Polymerization reactions are known to be one of the most complex types of chemical reactions. There are many reasons for the complexity of these reactions such as co-presence of different phases inside the reactor, high viscosity of reactor contents and large amounts of heat produced during the reaction. Furthermore, the complexity of these reactions is influenced by the existence of different reaction mechanisms, such as various chain growth reactions, chain transfer reactions, catalyst activation and deactivating reactions.

Each of these reasons and in particular the combination of the reasons makes the design and operation of polymerization reactors for polymerization reactions non-trivial. One major concern for the design of polymerization reactors and processes using such reactors is efficient mixing of the components in the reactor.

There have been several approaches applied in the prior art to solve this problem. One approach has been to use tubular reactors. The high surface area of tube or loop reactors assists in the removal of heat of the reaction. Mixing can occur within the reactor already by convection of the differently heated parts of the polymerization components. Furthermore, already the impulse of the introduced streams of polymerization reactants can have an impact on mixing in the reactor. In order to avoid problems of precipitation, the reactor feed streams should be at temperatures above the precipitation temperature of the polymer from the solvent. However higher reactor temperature may also lead to the undesirable formation of low molecular weight polymer. Thus, there are usually temperature limitations which restrict the operating flexibility of a tube or loop reactor. Furthermore, the control of such a mixing is very poor, resulting in drawbacks in view of reaction control and product quality. Therefore, in the prior art, mixers have been used to control the flow patterns and, hence, the mixing within the polymerization reactor.

In the US patent US 4,921,906 a polymerization reactor and process is disclosed, comprising a substantially cylindrical polymerization reactor with an inlet and an outlet, wherein the polymerization reactor comprises a coaxial guide tube, which is connected on both ends with the reactor. Furthermore, the reactor provides screw ribbons between the inner reactor wall and the guide tube, which are rotatably mounted around the axis of the reactor. Furthermore, at least one propeller mixer is installed in the guide tube. It is stated in US 4,921,906 that such an assembly can achieve better homogeneity and rapid equalization times. Nevertheless, the setup has the drawback that it requires two separately driven mixing devices within the reactor increasing downtime probability, complexity, costs and maintaining time. Furthermore, no specific means for heat control are implemented. Finally, no control of concentration and/or temperature gradients in the reactor can be achieved.

In the US patent US 6,319,996 B1 a reactor and a process for solution polymerization of olefins is presented, wherein the reactor comprises a mixing device consisting of a vertical draft tube with an impeller at the bottom and the top of the draft tube driven by a rotatable shaft, wherein within the draft tube at least one helical ribbon is also connected to the rotatable shaft. While such a setup is able to provide rapid mixing of components and thus is able to cope with heat transfer inside the guide tube and keeping the produced polymer in solution, still no solution for heat control is provided. Finally, the design does not allow for setting up specific gradients of temperature and/or concentration in the reactor, in particular no catalyst concentration control is provided.

US patent application US 2018/0050318 A1 discloses a reactor and process for polymerization. The reactor comprises a draft tube and a rotatably mounted helical ribbon type stirrer surrounding the draft tube. The lower end and the top end of the stirrer are connected to ring-shaped plates having holes for solution throughput. To the bottom plate a stirrer is connected for producing a flow into the draft tube. The advantages of such an assembly are that the mixing between higher temperature bulk solution and lower temperature reactants introduced into the reactor is enhanced and thus the quality of the produced polymer is improved. Nevertheless, still problems related to heat transfer and specific control of certain mixing patterns in terms of gradients remain. Furthermore, two separately driven mixing devices within the reactor are required increasing downtime probability, complexity, costs and maintaining time.

### Problem to be solved

Among different design criteria that have to be considered for the design of a polymerization reactor, in particular a solution polymerization reactor, the mixing inside of the polymerization reactor is very challenging. First of all, the viscosity of the components inside the polymerization reactor is relatively high. Typically, the viscosity depends on the polymerization process, the product produced (average molecular weight) and the corresponding conditions used in the reactor (pressure and temperature). Exemplary viscosities of reactor contents in polymerization reactions can be around 0.001 - 2 Pa s, even up to 5 Pa s.

Typically, it is needed to produce a homogenous polymer material having properties represented by distribution of certain value ranges rather than explicit single values, e.g. the molecular weight distribution. To achieve this, reactor design is typically aiming at maximum homogeneity of components in the reactor. Nevertheless, for modern specifically tailored property characteristics of the produced polymer, gradients of temperature and/or concentrations inside the reactor along certain dimensions or in certain areas of the reactor are desirable to introduce additional benefits for said distribution of value ranges and product properties, respectively.

Heat produced within the reactor by the exothermic polymerization reaction is typically absorbed and/or transferred away from the reactor. One reason for the need of removal of heat is control of the reaction conditions and, hence, safety. Another reason is the quality of the produced polymer. Too high temperature can lead to side reactions affecting the wanted properties distribution and to too low average molecular weights of the polymer.

In particular, in the case of solution liquid-phase polymerization reaction, typically, the reaction conditions are chosen to ensure having a single phase (i.e. the polymer in solution with the used solvent) inside the reactor. Such a single phase ensures product quality and smooth reactor operation. In particular, single phase operation ensures smooth operation of downstream equipment of the reactor, such as flash heaters. This can preferably be achieved by providing a single liquid phase effluent (from the reactor) ensuring optimal heat transfer e.g. in a downstream flash heater

Furthermore, in certain polymerization reactions such as high temperature solution ethylene-alpha-olefin polymerization reactions, the residence time of the components in the polymerization reactor is relatively short, i.e. below 20 minutes. Hence, the polymerization reactor must be suitable to ensure short mixing times to reach a certain state of mixing before the components leave the reactor again.

Therefore, polymerization reactors optimized in view of homogeneity of components in the reactor and product properties of the produced polymer, improved heat control, improved phase control and shortened mixing times, and specific control of certain mixing patterns such as gradients of concentration and/or temperature are generally needed.

### Object of the invention

In view of the problem as set out above, it is one object of the present invention to provide a polymerization reactor, in particular a solution polymerization reactor, comprising a mixing device for rapid homogenization of the bulk components and the reactants, which allows the adjustment of gradients in temperature and concentration, provides improved heat control and ensures single phase stability at the same time.

Furthermore, also in view of the problems as described above, it is a second object of the present invention to provide a polymerization process, in particular a solution polymerization process, for rapid homogenization of the bulk components and the reactants, which allows the adjustment of polymer properties by gradients in temperature and concentration, provides improved heat control and ensures single phase stability at the same time.

### Summary of the invention

It has now been surprisingly found out that above-mentioned problems are solved by a polymerization reactor assembly, comprising a reactor having a housing and an inner space, the reactor comprising at least one inlet, at least one outlet, a draft tube having a substantially cylindrical shape and an inner space, wherein the draft tube is located within the inner space of the reactor so that an upper opening and a lower opening of the draft tube are fluidly connected with the inner space of the reactor, and a stirrer comprising a top plate located above the lower opening of the draft tube, a stirrer blade having a helical shape, which surrounds the draft tube, wherein the axis of the draft tube and the axis of the stirrer blade are coinciding, the stirrer blade extending concentrically with respect to the the draft tube and the housing of the reactor, and a bottom plate located below the lower opening of the draft tube, wherein the inner space of the reactor comprises sections A, B, C, and D, wherein section A is the space defined by the housing of the reactor and an upper surface of the top plate, section B is the space defined by the housing of the reactor, the draft tube, a lower surface of the top plate and an upper surface of the bottom plate, section C is the space defined by the housing of the reactor and a lower surface of the bottom plate, and section D is the inner space of the draft tube, wherein the top plate has at least one first opening fluidly connecting section A and section B, wherein the bottom plate has at least one first opening fluidly connecting section B and section C, wherein the bottom plate has at least one second opening (19) fluidly connecting section C and section D, and wherein the stirrer is rotatable around the draft tube and inside the housing of the reactor.

It has been further surprisingly found out that said problems are solved by a process for polymerization of at least one monomer in a reactor assembly, comprising a reactor having a housing and an inner space, the reactor comprising at least one inlet, at least one outlet, a draft tube having a substantially cylindrical shape and an inner space, wherein the draft tube is located within the inner space of the reactor so that an upper opening and a lower opening of the draft tube are fluidly connected with the inner space of the reactor, and a stirrer comprising a top plate located above the lower opening of the draft tube, a stirrer blade having a helical shape, which surrounds the draft tube, wherein the axis of the draft tube and the axis of the stirrer blade are coinciding, the stirrer blade extending concentrically with respect to the draft tube and the housing of the reactor, and a bottom plate located below the lower opening of the draft tube, wherein the inner space of the reactor comprises sections A, B, C, and D, wherein section A is the space defined by the housing of the reactor and an upper surface of the top plate, section B is the space defined by the housing of the reactor, the draft tube, a lower surface of the top plate and an upper surface of the bottom plate, section C is the space defined by the housing of the reactor and a lower surface of the bottom plate, and section D is the inner space of the draft tube, wherein the top plate has at least one first opening fluidly connecting section A and section B, wherein the bottom plate has at least one first opening fluidly connecting section B and section C, wherein the bottom plate has at least one second opening (19) fluidly connecting section C and section D, and wherein the stirrer is rotatable around the draft tube and inside the housing of the reactor.

### Definitions

The term *'helical ribbon blade'* as used herein denotes a plane blade, mostly in rectangular shape if not wound, which is wound around an axis or essentially cylindrical shape along its longer side. Consequently, it extends from the axis or the cylindrical shape in a certain angle. Ideally, this angle is perpendicular to the surface of the cylindrical shape. Furthermore, ideally, the slope of the winding of the blade is always identical. Hence, also the distances between each layer of the helical ribbon blade is always essentially equal. Due to its helical nature, the helical ribbon blade can be wound around the axis or the cylindrical shape in two orientations, i.e. upwards clockwise or upward counter-clockwise..

The term '*axis*' as used herein has to be understood as a mathematical axis, i.e. a line. Hence, the axis of a cylinder is a line traversing through the cylinder and thereby being parallel to the surface of the cylinder and cutting at the centre of the cyclic areas formed by the cylinder at the bottom and at the top. Likewise, the axis of a helical shape behaves accordingly in relation to the cylinder defined by the helical shape, i.e. is an axis around which the helical shape is wound.

The term '*closest distance*' between the stirrer blade and the reactor walls as used herein is the distance which is smallest for all conceivable rotation combinations between the stirrer and the inner reactor walls. The same holds for the closest distance as used for the top and bottom plate.

### Description of the drawings

Figure 1 shows a schematic drawing of a reactor assembly according to the present invention. It should be understood that the schematic drawing does not reflect the actual dimensions of the reactor. In particular the closest distance between the bottom and top plate and the reactor walls and the stirrer blade and the reactor walls are depicted significantly larger than in reality for better readability of the Figures. The same holds for the remaining Figures.
Figure 2 shows a schematic drawing of a reactor assembly and a process according to the present invention showing the compartments A-D.
Figure 3 shows a schematic drawing of a reactor assembly according to the present invention further comprising stirrer baffles.
Figure 4 shows a schematic drawing of a reactor according to the present invention further comprising impeller blades at the bottom plate.

### Reference signs

- 1: reactor
- 2: housing of the reactor
- 3: inner space of the reactor
- 4: at least one inlet
- 5: at least one outlet
- 6: draft tube
- 7: inner space of the draft tube
- 8: axis of rotation of the draft tube
- 9: axis of rotation of the reactor
- 10: upper opening of the draft tube
- 11: lower opening of the draft tube
- 12: stirrer
- 13: top plate of the stirrer
- 14: stirrer blade
- 15: axis of rotation of the stirrer blade
- 16: bottom plate of the stirrer
- 17: at least one first opening of the top plate
- 18: at least one first opening of the bottom plate
- 19: at least one second opening of the bottom plate
- 20: at least one side opening of the draft tube
- 21: closest distance between housing and stirrer blade
- 22: at least one stirrer baffle
- 23: at least one impeller blade
- 24: closest distance between housing and top plate or bottom plate
- A: space defined by the housing and the upper surface of the top plate
- B: space defined by the housing, the draft tube, a lower surface of the top plate and an upper surface of the bottom plate
- C: space defined by the housing and a lower surface of the bottom plate
- D: inner space of the draft tube

### Detailed description of the invention

In the following, the invention is described in detail based on the Figures and the embodiments as found therein.

### Reactor assembly according to the invention

The basic concept of the present invention is the provision of a polymerization reactor, which enables rapid homogenization of the bulk components and introduced reactants, improves heat and phase control, and enables the adjustment of gradients in temperature and/or concentration to allow specific modification of polymer properties.

While rapid homogenization and adjustment of gradients in temperature and/or concentration of components, such as monomers, comonomers, solvent, and/or catalyst, seems to be contradictory to rapid homogenization of the bulk components and introduced reactants, the present invention solves this problem in general by provision of several distinct sections of the reactor, which are fluidly interconnected and the flow of components through which is enabled and controlled by a homogenization device, i.e. a stirrer.

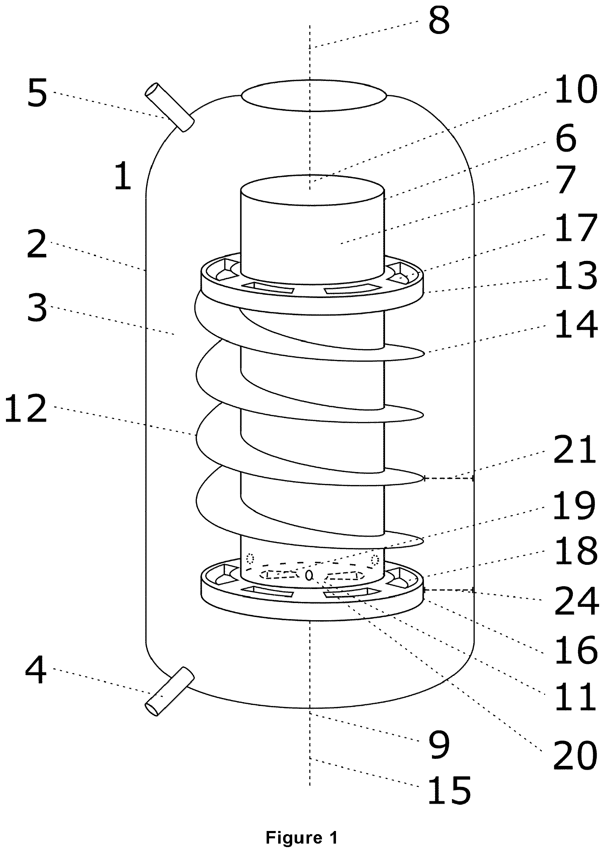

Therefore, the present invention relates to a polymerization reactor assembly as depicted in Figure 1, comprising a reactor (1) having a housing (2) and an inner space (3), the reactor (1) comprising
a) at least one inlet (4);
b) at least one outlet (5);
c) a draft tube (6) having a substantially cylindrical shape and an inner space (7), wherein the draft tube (6) is located within the inner space (3) of the reactor (1) so that an upper opening (10) and a lower opening (11) of the draft tube (6) are fluidly connected with the inner space (3) of the reactor (1), and
d) a stirrer (12) comprising
   - a top plate (13) located above the lower opening (11) of the draft tube (6),
   - a stirrer blade (14) having a helical shape, which surrounds the draft tube (6), wherein the axis (8) of the draft tube and the axis (15) of the stirrer blade (14) are coinciding, the stirrer blade (14) extending concentrically with respect to the draft tube (6) and the housing (2) of the reactor (1), and
   - a bottom plate (16) located below the lower opening (11) of the draft tube (6),

wherein the inner space (3) of the reactor (1) comprises sections A, B, C, and D, wherein
   - section A is the space defined by the housing (2) of the reactor (1) and an upper surface of the top plate (13),
   - section B is the space defined by the housing (2) of the reactor (1), the draft tube (6), a lower surface of the top plate (13) and an upper surface of the bottom plate (16),
   - section C is the space defined by the housing (2) of the reactor (1) and a lower surface of the bottom plate (16), and
   - section D is the inner space (7) of the draft tube (6),
wherein the top plate (13) has at least one first opening (17) fluidly connecting section A and section B,
wherein the bottom plate (16) has at least one first opening (18) fluidly connecting section B and section C,
wherein the bottom plate (16) has at least one second opening (19) fluidly connecting section C and section D, and
wherein the stirrer (12) is rotatable around the draft tube (6) and inside the housing (2) of the reactor (1).

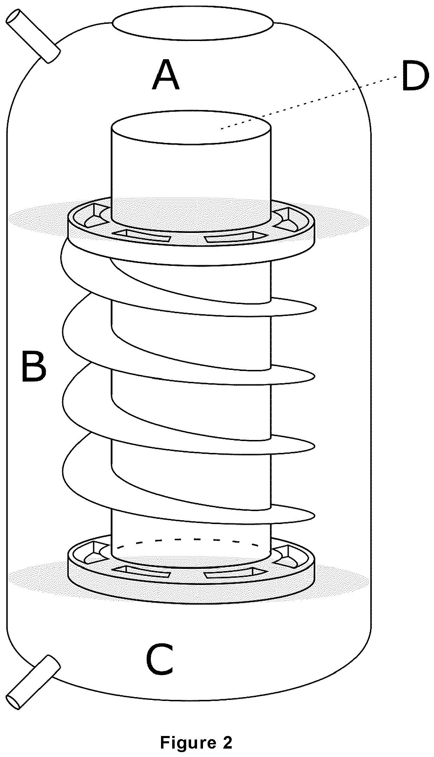

The upper surface of the top plate (13) and the lower surface of the bottom plate (16) are illustrated in Figure 2 by the grey areas. Respectively, the lower surface of the top plate (13) and the upper surface of the bottom plate (16) have to be understood in that the terms 'upper' and 'lower' are interpreted in view of the direction of the gravitational force, i.e. the direction of the axis of the reactor (9).

Said reactor assembly according to the invention is operated in that reactants are introduced into the at least one inlet (4) while the stirrer is rotated. The rotation direction of the stirrer is chosen depending on the helical orientation of the stirrer blade (14) in that the rotation of the stirrer results in a downward movement, i.e. from section A through section B to section C, of the bulk components in the reactor. These components are then forced through the at least one first opening (18) in the bottom plate (16) creating a counter flow to the reactants introduced via the at least one inlet (4). As a result, the flow of reactants is mixed with the flow of bulk components and forced through the at least one second opening (19) of the bottom plate (16) into the inner space (7) of the draft tube (section D). The combined flow of bulk components and reactants is forced to flow upwards within section D into section A. From there, a part of this flow is reintroduced into section B and forced by the stirrer blade (14) to flow down towards section C, while another part is withdrawn from the reactor through the at least one outlet (5). It should be noticed that in another embodiment of the invention the reactor assembly can also be operated in that the rotation direction of the stirrer is chosen depending on the helical orientation of the stirrer blade (14) in that the rotation of the stirrer results in a *upward* movement, i.e. from section C through section B to section A, of the bulk components in the reactor.

Therefore, preferably, the second opening (19) of the bottom plate (16) is placed in the bottom plate so that upon rotation of the bottom plate (16) also the second opening (19) rotates. Hence, preferably, the second opening is not concentric to the lower opening (11) of the draft tube. Such an arrangement ensures that the at least one second opening (19) applies a shear force upon the flow entering section D. Hence, such an at least one second opening (19) can replace a separate impeller for mixing the flow entering the section D reducing complexity and maintaining time of the reactor assembly. Hence, preferably, the reactor assembly of the present invention does not comprise a separate impeller for mixing the flow entering the section D.

As the bottom (16) and top plate (13) of the stirrer (12) are rotating with the stirrer blade (14), also the openings provided therein are rotating relative to the reactor (1), the draft tube (6) and also the components/reactants in the reactor. If a flow is forced through these openings while they are rotating, a shear force is applied to this flow. Hence, in view of the flow direction of the flow passing the opening, downstream of the opening, turbulent regimes are formed. This is in particular relevant for the transition from section A to B, from section B to C and from section C to D. Hence, the reactants introduced through the at least one inlet (4) enter section C, which has turbulent flow regimes due to the flow entering from section B through the at least one first opening (18) of the bottom plate. Therefore, the reactants are rapidly mixed with the bulk components and after being forced into the draft rube enter again a turbulent regime due to passing the at least one second opening (19) of the bottom plate (16). Thus, such a setup has the advantage that the reactants introduced into the reactor are rapidly mixed with the bulk components.

Accordingly, in section B, the stirrer blade (14) forces the bulk components to a rolling movement along the helical ribbon blade (14) also creating a turbulent regime and thorough mixing within section B.

Nevertheless, the setup also assures that temperature and concentration gradients can be achieved. In view of concentration gradients, the mixed flow of reactants and bulk components will have the highest reactant concentration in section C and when entering section D. During the time flowing upwards within the inner space (7) of the draft tube (6), the polymerization reaction proceeds resulting in a decrease of reactants along the flow direction within the inner space (7) of the draft tube (6). Therefore, a concentration gradient can be adjusted within section D and from section C to section A. The same holds for section B. However, in this case, the gradient follows the downwards flow direction forced by the stirrer. As the temperature of the bulk components depends mainly on the reaction temperature of the exothermic polymerization reaction and on the initial temperature of the reactants introduced into the at least one first inlet (4), the gradients of the temperature is essentially inversely proportional to concentration of the monomer/comonomer. Hence, within section D the temperature can follow an increasing gradient. Generally, the gradient in section B follows the same pattern. However, heat transfer to the reactor walls can have an opposite effect during the time the bulk components travel down section B.

Therefore, preferably, the housing (2) of the reactor (1) is a jacketed housing. In such a jacketed housing a cooling liquid can be circulated, which takes heat from the bulk components and removes it from the reactor. Depending on the flow direction of the cooling liquid in the jacketed housing, the temperature gradient of section B can be adjusted to be increasing or decreasing with flow direction or to be non-existent.

Both temperature and/or concentration gradients can be used to influence key properties of the produced polymer. Such key properties are molecular weight distribution and/or comonomer distribution or other properties related to these distributions and the melting temperature. Generally, polymer microstructure properties, such as molecular weight distribution and comonomer distribution, are affected by the concentrations of different components in the reactor, i.e. monomer, comonomer and chain transfer agents as hydrogen, as well as the polymerization temperature. The local change in these variables along the reactor length and diameter creates gradients that result in variation in polymer properties.

In summary, a reactor assembly according to the present invention and in particular the combination of a draft tube with a helical ribbon type stirrer has various inter-correlated effects: A single liquid phase can be adjusted in solution polymerization processes even at conditions, which normally would result in phase separation. This is due to the high shear stresses applied by the stirrer to the bulk components in the reactor. Temperature/concentration gradients can be utilized in the process while maintaining high homogeneity of the liquid phases. E.g. gradients can be implemented and the phase could be kept a single phase. More specifically, temperature gradients could be introduced while avoiding concentration gradients and vice versa.

Preferably, in the reactor assembly according to the present invention, the at least one inlet (4) is located in a lower half of the reactor (1) and the outlet (5) is located in an upper half of the reactor (1). More preferably, in the reactor assembly according to the present invention, the at least one inlet (4) is located in section (C) and the outlet (5) is located in section (A). Typically, CSTR (continuous stirred-tank reactor) liquid reactors are operated in a vertical design, wherein the reactants are introduced in the lower half and the products are withdrawn from the upper half of the reactor.

The draft tube is preferably mounted in the reactor so that the upper (10) and lower openings (11) are accessible by the fluid. Also preferably, the stirrer and in particular the bottom plate (16) can freely rotate around the draft tube. In an embodiment, where the top plate is shaped as a ring and the bottom plate is a plate, the draft tube preferably extends to the upper part of the reactor and e.g. has parts of its walls connected to the reactor wall.

The stirrer (12) is preferably driven by a rotating shaft connected to the bottom plate (16). Said rotating shaft preferably extends through a stuffing box located at the bottom of the reactor (1). The rotating shaft can be driven by any means known in the art, e.g. by an electrical motor.

In a preferable embodiment of the reactor assembly according to the invention the reactor (1) has a substantially cylindrical shape, preferably has a cylindrical shape. A cylindrical shape ensures best mixing inside the reactor due to the rotating stirrer. Hence, the axis of the draft tube (8) and the axis of the reactor (9) are coinciding. Such a setup ensures that the mixing patterns applied by the stirrer (12) are essentially equal in every rotation symmetrically identical point in the reactor (1).

In an even more preferred embodiment of the invention, the reactor assembly according to the present invention has during operation a ratio of a closest distance (21) between the reactor housing (2) and the stirrer blade (14) to the diameter of the reactor (1) in the range of from 1 to 10 mm/m, preferably from 2 to 8 mm/m, and most preferably from 3 to 7 mm/m. It is preferred that the closest distance (21) between the reactor housing (2) and the stirrer blade (14) is between 0.1 and 1 %, more preferably between 0.2 and 0.8 %, and even more preferably between 0.3 and 0.7 %, of the inner diameter of the housing (2).

In such reactor assemblies, the stirrer blade (14) follows the walls of the reactor (1). If the ratio is below the lower value, risk of blockage of the stirrer is high either by heat extension or by precipitated polymer. On the other hand, if the ratio is higher than the provided range, the advantageous effect described in the following is not significant anymore. Such configuration ensures high mass transfer rates especially for higher viscosity solution. In case the polymer tends to precipitate on the reactor walls i.e. due to cooling but also in case of other reasons, said closest distance ensures that the downwards moving edge of the stirrer blade (14) removes the attached precipitated polymer from the walls of the reactor again. The mixing pattern in section B ensures that the precipitate is included into the bulk again. As a further advantage of such a preferred embodiment, the heat transfer rates can be significantly improved. Without being bound to theory it is believed that lower precipitate on the walls reduces heat insulation at the walls and increase the heat transfer rates.

In another preferred embodiment of the reactor assembly of the present invention, the draft tube (6) of the reactor (1) comprises at least one side opening (20). This opening forms a short cut for flow from section B to section D. Hence, the flow being forced through this opening does not have to enter section C to get into section D, i.e. into the inner space of the draft tube (7) again. As an effect of such a setup, the concentration of reactants in this flow is not increased in comparison to the flow to be forced to flow through section C. Therefore, the opening (20) in the draft tube (6) relatively decreases the concentration of reactants in the section D. With the help of this opening, the gradient in monomer/comonomer concentration in section D, C and B can be adjusted. The larger the opening is, the more flow from section B will enter section D without take-up of fresh reactant resulting in a smaller concentration gradient. The position of the opening in the draft tube also influences the gradient of concentration. The closer the upper opening (10) of the draft tube (6) is positioned to the lower opening (11) of the draft tube (6), the earlier the gradient will be influenced by the opening. Therefore, preferably, the at least one side opening (20) of the draft tube (6) is positioned in the lower half of the draft tube (6), more preferably in the lower quarter, even more preferably in the lower eighth of the draft tube. The shape of the at least one side opening (20) of the draft tube (6) can be generally any shape. However, shapes allowing for maximum throughput are preferably, such as rectangles or circles. Most preferred shapes for the side openings (20) are circles. In another preferred embodiment of the present invention, the side opening (20) of the draft tube (6) is implemented by a gap between the draft tube (6) and the bottom plate (16) along the axis of the reactor (9). Preferably, the length of the gap along the axis of the reactor (9) is in the range of from 100 to 400 mm, preferably 150 to 350 mm, and most preferably 170 to 300 mm. Likewise, the length of the gap along the axis of the reactor (9) is in the range of from 3 to 10% of the height of the reactor, preferably 4 to 6%, and most preferably 5 to 8%.

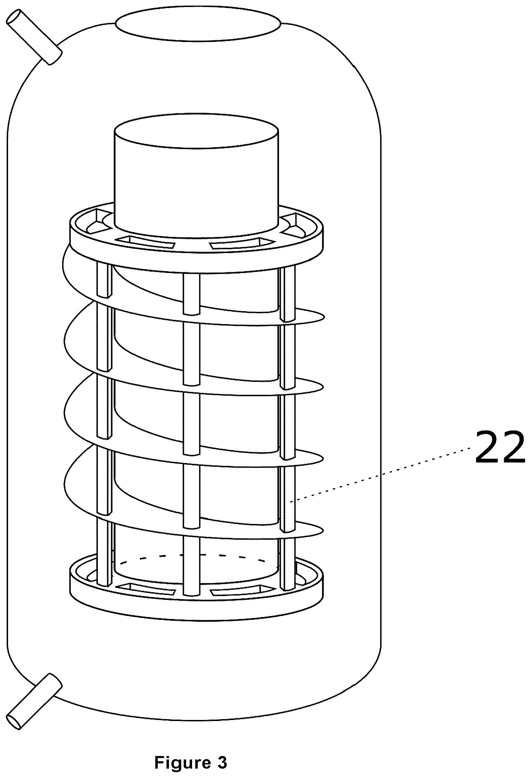

In another preferred embodiment, in the reactor assembly according to the present invention as depicted in Figure 3 the stirrer (12) further comprises at least one stirrer baffle (22) connecting the top plate (13) and the bottom plate (16), wherein the at least one stirrer baffle (22) extends through the stirrer blade (14). More preferably, the at least one stirrer baffle (22) extends perpendicular from the top plate (13) to the bottom plate (16). One advantage of this setup is that the helical stirrer blade (14) is mechanically stabilized. In particular for systems with high viscosity, the shear forces are high and can lead to deformation of the helical ribbon blade (14). The stirrer baffles (22) support the whole stirrer and lead to less deformation and better force transfer to the bulk. As a second effect, these stirrer baffles (22) enhance the mixing inside the stirrer section (B) and thus improve the homogeneity of the product. Furthermore, they ensure that no hot spots are formed inside the reactor.

Preferably, the ratio of the tangential length of the reactor (1) to the largest diameter of the reactor (1) is in the range of from 1.1 to 4, more preferably from between 1.2 to 3, and most preferably from 1.2 to 2.5. Even more preferably, the ratio of the height of the reactor (1) to the largest diameter of the reactor (1) is in the range of from 1.1 to 4, more preferably from 1.2 to 3, and most preferably from 1.2 to 2.5.

In another preferred embodiment of the invention, the stirrer (12) comprises two helical ribbon stirrer blades (14), which are separated by 180° rotation to each other. A second stirrer blade significantly enhances the throughput of the stirrer.

Preferably, the distance between the lower surface of the top plate (13) and the bottom plate (16) is in the range of 1 to 3 times the pitch of the helix of the helical ribbon stirrer blade (14), wherein the pitch of a helix is the height of one complete helix turn, measured parallel to the axis of the helix, preferably twice the pitch of the helix of the helical ribbon stirrer blade (14).

Preferably, the helix of the helical ribbon stirrer blade (14) is a circular helix.

Furthermore, preferably, the ratio between the pitch of the helix of the helical ribbon stirrer blade (14) and the largest diameter of the reactor (1) is in the range of from 0.2 to 1.0, preferably from 0.3 to 0.9, and most preferably from 0.5 to 0.7.

Likewise, preferably, the ratio between twice the pitch of the helix of the helical ribbon stirrer blade (14) and the height of the reactor (1) is in the range of from 0.4 to 1.1, preferably from 0.6 to 0.9, and most preferably from 0.7 to 0.8.

Preferably, the ratio of the area of the projection of the stirrer blade (14) along the axis (15) of the stirrer blade (14) to the cross-sectional area of the draft tube (6) is in a range from 1 to 6, preferably 1.5 to 4 and most preferably 1.8 to 2.5.

Preferably, the top plate (13) is provided as a ring or a double ring, more preferably with studs. Such a ring is preferably located above the top of the stirrer blade (14), which is in such an embodiment preferably located lower than the upper opening (10) of the draft tube. Even more preferably, the top plate (13) is formed by two circular rings, in between which small vertical plates are welded. Preferably, between 4 and 16 vertical blades, more preferably between 6 and 14 vertical blades and most preferably 8 vertical blades are welded between the two rings with a gap in between representing the at least one first opening (17) of the top plate (13).

Preferably, the bottom plate (16) is formed by a circular plate, on which the helicon ribbon stirrer blade rests. The bottom plate (16) is equipped with at least one first opening (18) to allow fluid to flow up and downwards and which rotates with the stirrer blade. The stirrer blade (14) pumps the fluid downwards through the holes in the plate upon rotation. Most preferably, the bottom plate (16) is a plate comprising two rings supported by spokes.

In order to achieve the separation in sections most efficiently, the ratio between the closest distance (24) between the edge of the bottom plate (16) and/or the top plate (13), i.e. the circumference of the plate, and the inner wall of the reactor (1) and the diameter of the reactor (1) is in the range of from 10 to 60 mm/m, preferably from 15 to 50 mm/m, and most preferably from 20 to 45 mm/m.

If said ratio is below this value, risk of blockage of the stirrer is high either by heat extension. On the other hand, if the ratio is higher than the provided range, the difference between the sections A, B, and C is not so distinct anymore, as more bulk components can pass the top or bottom plates without being subject to the created shear forces. It should, however, be mentioned that also such behaviour can be beneficial for certain applications, i.e. product properties. Therefore, this limitation is only essential if a distinct differentiation between the sections A, B and C is necessary.

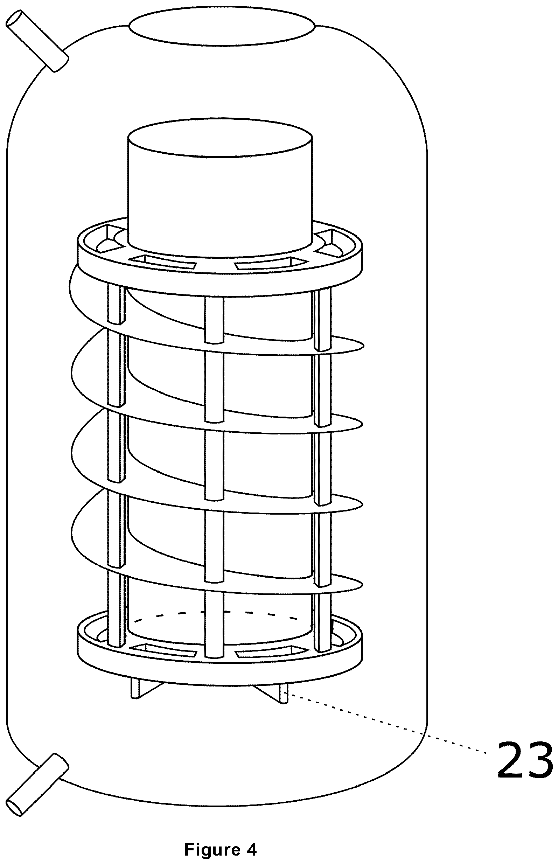

Preferably, as depicted in Figure 4, the bottom plate (16) further comprises at least one impeller blade (23), wherein the at least on impeller blade (23) extends from the bottom blade (16) into section C. More preferably, the bottom plate comprises 1 to 5, even more preferably 2 to 4, and most preferably 3 impeller blades. Most preferably, the at least one impeller blade (23) extends perpendicular from the bottom plate (16). Said impeller blades (23) act as an impeller stirrer opposing the flow generated by the stirrer blade (14) of the stirrer (12). Such an opposing flow has two effects. First, the bulk components and reactants in section C are forced to enter section D through the at least one second opening (19) of the bottom plate (16) supporting the flow through section D. As a second effect, the turbulent regime created by the flow from section B through the at least one first opening (18) of the bottom plate (16) into section C is further disturbed by the counter flow induced by the impeller blade (23). Hence, the mixing in section C is further increased.

In a further preferred embodiment of the invention, the reactor assembly of the invention comprises a dip pipe (not shown in the figures) in the draft tube (6) for feeding catalyst into the reactor, preferably into section D (the draft tube (6). With the current flow pattern the catalyst will be instantly transferred to section C encountering the reactant stream added via the first inlet. Preferably, the dip pipe is mounted to the wall of the draft tube (6). Preferably, the outlet of the dip pipe is positioned in the lower half of the draft tube (6), more preferably in the lower quarter, even more preferably in the lower eighth. Another preferred position is close to the bottom plate (16) of the stirrer (12). The dip pipe is used as a second feed for catalyst. Usually, the reactant stream introduced into the at least first inlet (4) already comprises catalyst. The dip pipe enables custom adjustment of the catalyst concentration in the draft tube. Therefore, not only enhanced turnover numbers, but also a gradient in view of catalyst concentration can be achieved in the draft tube. In parallel to the catalyst also activator can be added via the draft tube. In a more preferred embodiment, activator and catalyst are fed together in one dip pipe comprising two individual piping inside. The dip pipe preferably is mounted from the top of the reactor.

### Process according to the present invention

Generally, the present invention can be used in various polymerization processes. However, it is in particular useful with solution polymerization reactions.

### Polymerization process

The process of the present invention could be any process for the production of a polymer. However, preferably, the present invention is applicable for supercritical, solution and advanced solution polymerization processes. More preferably are continuous supercritical, solution and advanced solution polymerization processes. Most preferably, the production process comprises a continuous solution polymerization process.

Preferably, the polymer produced in the present invention is an olefin homo- or copolymer. More preferably, the monomer of this polymer is selected from an α-olefin having a carbon atom number of 2 to 4, preferably ethylene, propylene, 1-butene, most preferably from ethylene. Most preferably, the polymer is a polyethylene homopolymer.

In case the polymer is a copolymer, the comonomer preferably is different from the α-olefin monomer and is selected from the group consisting of linear and cyclic olefins and α-olefins having from 2 to 12 carbon atoms and mixtures thereof. More preferably, the comonomer is an α-olefin different from the olefin monomer and is selected from the group consisting of linear olefins having from 2 to 12 carbon atoms and mixtures thereof, preferably 4 to 10 carbon atoms, most preferably 1-octene.

Most preferably, the olefin polymer of the present invention is a polymer having a MFR₂ value of between 0.2 and 1000 g/10 min, preferably between 1.0 and 60 g/10 min, and most preferably between 1 and 30 g/10 min.

Preferably, the polymer has a molecular weight of lower than 100 kg/mol, preferably lower than 80 kg/mol and most preferably lower than 65 kg/mol.

The density of the polymer of the present invention is between 960 and 845 kg/m³, preferably between 940 and 850 kg/m³, and most preferably between 930 and 855 kg/m³.

In a most preferred embodiment, the polymer is produced in a solution polymerization process as disclosed in the following.

The polymerization is typically conducted in the presence of an olefin polymerization catalyst. Preferably, the olefin polymerization catalyst may be a single site polymerization catalyst, more preferably a metallocene polymerization catalyst or a Ziegler-Natta polymerization catalyst.

Such Ziegler-Natta polymerization catalysts comprise a transition metal compound, preferably a metal compound of group 4, such as a compound of titanium, zirconium or hafnium.

The transition metal compound may be a halide of the transition metal, such as a trihalide or a tetrahalide. Typically, the transition metal halide is a titanium halide, such as titanium trichloride or titanium tetrachloride.

The transition metal compound may also be a transition metal alkyl or transition metal alkoxide compound. Such compounds are often contacted with a chlorinating compound, such as an alkyl chloride.

The transition metal compound may be combined with a group 2 metal halide, such as magnesium halide, like magnesium dichloride, and/or with a group 13 metal halide, such as aluminium or boron halide, like aluminium trichloride. Such catalysts are well known in the art and are referred to as Ziegler-Natta catalysts. A Ziegler-Natta catalyst is typically used in combination with a cocatalyst, such as an aluminium alkyl.

The polymerization catalyst may be a Ziegler-Natta catalyst as disclosed in EP 280352 A, EP 280353 A and EP 286148 A.

The single site polymerization catalyst comprises a transition metal compound which may also be a compound comprising an organic ligand having a cyclopentadienyl structure, such as cyclopentadienyl, fluorenyl or indenyl. Such organic ligands may also bear substituents. The transition metal may have one or two such organic ligands, which optionally are bridged, and two or three other ligands, such as alkyl, aryl or halide. Such catalysts are also well known in the art and are referred to as metallocene catalysts.

The single site polymerization catalyst may be a metallocene catalyst as disclosed in WO 1993025590 A, US 5001205 A, WO 1987003604 A, US 5001244 A, WO 2018/178151 A1, WO 2018/178152 A1, WO 2018/108917 A1, and WO 2018/108918 A1, or it may be a combination of these. In addition, other suitable catalysts, such as late transition metal catalysts, can be used.

In a solution polymerization process a solvent is also present. The solvent is in liquid or supercritical state in the polymerization conditions. The solvent is typically and preferably a hydrocarbon solvent. The liquid hydrocarbon solvent used is preferably a C₅₋₁₂-hydrocarbon, which may be unsubstituted or substituted by C₁₋₄ alkyl group such as pentane, methyl pentane, hexane, heptane, octane, cyclohexane, methylcyclohexane and hydrogenated naphtha. More preferably, unsubstituted C₆₋₁₀-hydrocarbon solvents are used.

Other components may also be added into the reactor. It is known to feed hydrogen into the reactor for controlling the molecular weight of the polymer formed during the polymerization. The use of different antifouling compounds is also known in the art. In addition, different kinds of activity boosters or activity retarders may be used for controlling the activity of the catalyst.

Typically, the content of the polymer in the product stream comprising the solvent, the polymer and the unreacted monomer and optionally comonomer is from 10 to 50 wt%, preferably from 10 to 40 wt%, more preferably from 10 to 35 wt%.

In the present invention, the polymerization process is carried out in polymerization reactor assembly as described above.

The present invention is preferably carried out in a process, in which the viscosity of the components inside the reactor under polymerization conditions is between 0.005 to 10 Pa s, preferably between 0.01 and 5 Pa s. In such a high viscosity setup the high mixing capabilities of the present invention are in particular useful.

### Examples

Examples IE1 and IE2 according to table 1 have been carried out using a single site catalyst and a co-activator in a solution ethylene 1-octene copolymerisation process at a temperature of 195 °C and a pressure of 85 Barg in a reactor assembly according to the invention having a volume of 10 m³. The solvent used for the examples was a C6 mixture. The mixing speed in all examples was 100 rpm. In both examples, the side opening of the draft tube (20) was implemented in that a gap between the draft tube and the bottom plate in length has been left open. The distance between the draft tube end and the bottom plate along the axis of the reactor was 170 mm for IE1 and 255 mm for IE2. Hence, in comparison, IE1 and IE2 differ only in the open area implemented for the side opening of the draft tube (cf. also the open area value as provided in table 1).

The produced polymer comprised 21 wt.% 1-octene comonomer and had a melt flow rate of 10 dg/min.

The examples have been simulated by CFD using ANSYS Fluent 2021.R1 software with coded reaction kinetics and instantaneous distributions as described by Soares, J.B.P. (The use of instantaneous distributions in Polymerization Reaction Engineering, Macromol. React. Eng. 2014, 8, 235-259).

The applied terminal model or first order Markov model has been applied for the co-polymerization, e.g. described by Fink, G. and Richter, W.J. in Copolymerization Parameters of Metallocene-Catalyzes Copolymerization (part II 329-337) in Brandrup, J. Immergut, Edmund H. Grulke, Eric A. Abe, Akihiro Bloch, Daniel R.. (1999; 2005). Polymer Handbook (4th Edition). John Wiley & Sons.

Kinetic parameters were estimated based on mini-pilot plant data and complemented with reactivity ratios derived of polymer composition analyses (tryads). The model was validated versus continuous plant operational data and product properties.

Examples IE1 and IE2 show that by generation of a macroscopic flow pattern upwards through the draft tube the side opening (20) between the draft tube (6) and the bottom plate (16) the molecular weight distribution of the resulting polymer can be adjusted. Furthermore, by increasing the side opening surface area, a larger by pass flow is generated increasing backmixing.

**Table 1**

| | | IE1 | IE2 |
|---|---|---|---|
| **Reactor properties** | | | |
| Reactor volume | m³ | 10 | 10 |
| Open area *gap wall* / *bottom plate* (21) | m² | 0.249 | 0.249 |
| Open area *first opening bottom plate* (18) | m² | 0.417 | 0.417 |
| Open area *side opening of draft tube* (20) | m² | 0.571 | 0.857 |
| Open area *total* (18 + 20 + 24) | m² | 1.24 | 1.52 |
| Open area ratio (20 / (18 + 20 + 24)) | % | 46 | 56 |

| **Process conditions** | | | |
|---|---|---|---|
| Circulation time (solution) | s | 32.1 | 29.1 |
| Mass flow *mixer* (B) | kg/s | 174 | 192 |
| Mass flow *side opening of draft tube* (20) | kg/s | 25 | 33 |
| Mass flow ratio (20 / 18 + 20) | % | 14 | 17 |
| Velocity *side opening of draft tube* (20) | m/s | 0.08 | 0.07 |

| **Polymer properties** | | | |
|---|---|---|---|
| Viscosity of polymer solution | Pa s | 0.17 | 0.17 |
| Number average molecular weight (Mn) | g/mol | 15600 | 15300 |
| Weight average molecular weight (Mw) | g/mol | 31200 | 31200 |
| Polydispersity (Mw/Mn) | - | 2.00 | 2.04 |

## Claims

1. Polymerization reactor assembly, comprising a reactor (1) having a housing (2) and an inner space (3), the reactor (1) comprising
a) at least one inlet (4);
b) at least one outlet (5);
c) a draft tube (6) having a substantially cylindrical shape and an inner space (7), wherein the draft tube (6) is located within the inner space (3) of the reactor (1) so that an upper opening (10) and a lower opening (11) of the draft tube (6) are fluidly connected with the inner space (3) of the reactor (1), and
d) a stirrer (12) comprising
- a top plate (13) located above the lower opening (11) of the draft tube (6),
- a stirrer blade (14) having a helical shape, which surrounds the draft tube (6), wherein the axis (8) of the draft tube and the axis (15) of the stirrer blade (14) are coinciding, the stirrer blade (14) extending concentrically with respect to the draft tube (6) and the housing (2) of the reactor (1), and
- a bottom plate (16) located below the lower opening (11) of the draft tube (6),
wherein the inner space (3) of the reactor (1) comprises sections A, B, C, and D, wherein
- section A is the space defined by the housing (2) of the reactor (1) and an upper surface of the top plate (13),
- section B is the space defined by the housing (2) of the reactor (1), the draft tube (6), a lower surface of the top plate (13) and an upper surface of the bottom plate (16),
- section C is the space defined by the housing (2) of the reactor (1) and a lower surface of the bottom plate (16), and
- section D is the inner space (7) of the draft tube (6),
wherein the top plate (13) has at least one first opening (17) fluidly connecting section A and section B,
wherein the bottom plate (16) has at least one first opening (18) fluidly connecting section B and section C,
wherein the bottom plate (16) has at least one second opening (19) fluidly connecting section C and section D, and
wherein the stirrer (12) is rotatable around the draft tube (6) and inside the housing (2) of the reactor (1).

2. Reactor assembly according to claim 1, wherein the closest distance (21) between the reactor housing (2) and the stirrer blade (14) is between 0.1 and 1 %, preferably between 0.2 and 0.8 %, and even more preferably between 0.3 and 0.7 %, of the inner diameter of the housing (2).

3. Reactor assembly according to any of the preceding claims, wherein the draft tube further comprises a side opening (20).

4. Reactor assembly according to any of the preceding claims, wherein the housing (2) of the reactor (1) is a jacketed housing.

5. Reactor assembly according to any of the preceding claims, wherein the reactor (1) has a substantially cylindrical shape, preferably has a cylindrical shape.

6. Reactor assembly according to any preceding claims, wherein the stirrer (12) further comprises at least one stirrer baffle (22) connecting the top plate (13) and the bottom plate (16), wherein the at least one stirrer baffle (22) extends through the stirrer blade (14).

7. Reactor assembly according to claim 6, wherein the at least one stirrer baffle (22) extends perpendicular from the top plate (13) to the bottom plate (16).

8. Reactor assembly according to any of the preceding claims, wherein the bottom plate (16) further comprising at least one impeller blade (23), wherein the at least on impeller blade (23) extends from the bottom blade (16) into section C.

9. Reactor assembly according to claim 8, wherein the at least one impeller blade (23) extends perpendicular from the bottom blade (16).

10. Reactor assembly according to any one of the preceding claims, wherein the mixer device comprises a drive selected from a variable speed drive (VSD), a variable frequency drive (VFD), variomatic motor and mechanical geared speed adjuster.

11. A process for polymerization of at least one alpha-olefin monomer using a reactor assembly according to any of the preceding claims 1 to 9.

12. Process according to claim 11, wherein the at least one alpha-olefin monomer comprises an alpha-olefin comonomer.

13. Process according to claim 12, wherein the polymerization is conducted in the presence of an alpha-olefin comonomer, nd at least one alpha-olefin monomer is ethylene.

14. Process according to any of the preceding claims 11 to 13, wherein the polymerization is a solution liquid-phase polymerization conducted in the presence of a single site polymerization catalyst and an inert solvent.

15. Process according to any of the preceding claims claims 11 to 14, wherein the polymerization is conducted in a single phase solution.
